# EUROPÄISCHE PATENTSCHRIFT

(11) **EP 3 928 396 B1**
(45) Veröffentlichungstag und Bekanntmachung des Hinweises auf die Patenterteilung: **26.08.2026**
(21) Anmeldenummer: 20703377.0
(22) Anmeldetag: 15.01.2020
(51) Int. Cl.: H02G 3/08, H02G 3/10, H02G 3/16, H02G 3/22

(54) **DURCHFÜHRUNGSGEHÄUSE**
BUSHING HOUSING
BOÎTIER DE TRAVERSÉE

(30) Priorität: 29.01.2019 CN 201910083940
(43) Veröffentlichungstag der Anmeldung: 29.12.2021
(73) Patentinhaber: HARTING Electric Stiftung & Co. KG, 32339 Espelkamp (DE)
(72) Erfinder: HELLIGE, Denny, 32549 Bad Oeyenhausen (DE); WEN, Ensign, Zhuhai City, Guangdong 519085 (CN); GERSTL, Walter, 2384 Breitenfurt bei Wien (AT)
(86) Internationale Anmeldenummer: PCT/DE2020/100021
(87) Internationale Veröffentlichungsnummer: WO 2020/156610

(56) Entgegenhaltungen:
- DE-U1- 202010 008 934
- US-A- 5 349 790
- US-A1- 2016 241 007
- EATON: "Condulet FS and FD single-gang device boxes -cast iron or aluminum", HTTPS://MEDIA.DISTRIBUTORDATASOLUTIONS.COM/, 31 December 2018 (2018-12-31), XP093137946, Retrieved from the Internet <URL:https://media.distributordatasolutions.com/csv_eaton/2020q2/documents/c6a960b190ea2317c1eaab74e5310e881c485a4b.pdf> [retrieved on 20240305]
- WEIDMULLERUK: ""WOW" Our compact, high-current, connector system for rail engineering applications | Weidmüller UK", HTTPS://WEIDMULLERUK.WORDPRESS.COM/, 27 August 2014 (2014-08-27), XP055671611, Retrieved from the Internet <URL:https://weidmulleruk.wordpress.com/2014/08/27/wow-our-compact-high-current-connector-system-for-rail-engineering-applications/> [retrieved on 20200225]

## Beschreibung

Die Erfindung geht aus von einem Durchführungsgehäuse nach der Gattung des unabhängigen Anspruchs 1.

Derartige Durchführungsgehäuse werden benötigt, um Leitungen bzw. Kabel aus einem geschlossenen Bereich heraus in einen anderen Bereich zu führen oder umgekehrt.

### Stand der Technik

Die EP 2 845 277 A2 zeigt ein Durchführungsgehäuse, dass an einer elektrischen Baugruppe angeordnet ist. Das Durchführungsgehäuse besteht aus einem Gehäuseunterteil und einem Gehäuseoberteil. Im Gehäuseunterteil sind Ausnehmungen vorgesehen, in denen mehrere Kabeldurchführungsdichtungen zum Durchführen von Kabeln angeordnet sind. Die Kabeleinführrichtung und die Kabelausführrichtung nehmen bei diesem Durchführungsgehäuse einen Winkel größer als 90° zueinander ein. Eine solche Anordnung benötigt viel Platz. Für jedes Kabel ist eine eigene Ausnehmung vorgesehen, so dass die Anzahl benötigten Kabel vorher abgestimmt und bekannt sein muss. Dadurch ist das Durchführungsgehäuse nicht für alle Baugruppen bzw. Geräte flexibel einsetzbar.

Die US 2016/241007 A1 zeigt eine elektrische Baugruppe zur Installation in einer Gebäudestruktur für eine Strom- und Telekommunikationsverteilung.

Die DE 20 2010 008 934 U1 zeigt eine Anschlussvorrichtung, die zur Installation auf einer Außenoberfläche eines elektrischen Gerätes vorgesehen ist, mit einem Übergehäuse, welches ein Grundgehäuse mit einem Boden und einen Gehäusedeckel umfasst, wobei im Boden eine Ausnehmung zum Anschluss einer unterhalb der Außenoberfläche angeordneten ersten elektrischen Baugruppe vorgesehen ist.

Die US 5,349,790 A offenbart eine Dachrohreintrittsöffnung zur Durchführung mehrerer Leitungen durch ein Gebäudedach. Die Dachrohreintrittsöffnung umfasst aufstehende Seitenwände, die eine Öffnung definieren, einen an einer Seitenwand angelenkten abnehmbaren Deckel, sowie mehrere Öffnungen in den Seitenwänden zur Aufnahme von Rohren oder Leitungen. Die Rohre oder Leitungen können elektrische Leitungen oder Rohre mit Kühlmittel sein und werden horizontal durch die vertikalen Seitenwände geführt. Der Bordstein kann aus verzinktem Stahl oder grundiertem verzinktem Stahl konstruiert sein. Eine Neopren-Dichtung kann entlang der Oberkante des Bordsteins zur Abdichtung gegenüber dem Deckel vorgesehen sein.

### Aufgabenstellung

Die Aufgabe der Erfindung besteht darin ein flexibles und platzsparendes Durchführungsgehäuse bereitzustellen.

Die Aufgabe wird durch den Gegenstand des unabhängigen Anspruchs 1 gelöst.

Vorteilhafte Ausgestaltungen der Erfindung sind in den Unteransprüchen angegeben.

Das erfindungsgemäße Durchführungsgehäuse dient zur Durchführung einer oder mehrerer Leitungen und/oder Kabel in einen oder aus einen geschlossenen Bereich. Der geschlossene Bereich weist hierbei eine Einhausung auf, die zumindest eine Wand aufweist, an welcher das Durchführungsgehäuse montiert werden kann. Bei den Leitungen kann es sich beispielsweise um stromführende Leiter mit einem großen Querschnitt handeln. Aber auch pneumatische Leitungen oder Lichtwellenleiter sind gleichermaßen denkbar. Bei den Kabeln kann es sich beispielsweise um mehradrige Kabel handeln. Die Erfindung ist nicht auf die Art der Leitungen oder Kabel beschränkt. Gegebenenfalls werden die Begriffe Leitungen und Kabel im Rahmen der vorliegenden Anmeldung auch synonym verwendet.

Das Durchführungsgehäuse besteht aus einem Gehäusekörper und einem dazu passenden Gehäusedeckel. Passend bedeutet in diesem Sinne, dass der Gehäusekörper durch den Gehäusedeckel vollständig verschlossen wird und das Durchführungsgehäuse einen von der restlichen Umwelt abgeschirmten Hohlraum einschließt. Der Gehäusedeckel ist abnehmbar und kann über Befestigungsmittel verliersicher und reversibel an dem Gehäusekörper befestigt werden. Der Gehäusedeckel erlaubt, im abgenommenen Zustand, einen komfortablen Zugriff auf die Durchbruchsöffnung und die Austrittsöffnung innerhalb des Gehäusekörpers. Der Gehäusedeckel ist haubenförmig ausgestaltet und so designt, dass sowohl die Durchbruchsöffnung als auch die Austrittsöffnung bzw. die Austrittsöffnungen per Hand leicht erreichbar sind.

Der Gehäusekörper weist eine Durchbruchsöffnung und zumindest eine Austrittsöffnung auf. Die Durchbruchsöffnung korreliert in der Regel mit einem Durchbruch in einen geschlossenen Bereich. In diesem Fall handelt es sich bei dem geschlossenen Bereich um einen Waggon eines Schienenfahrzeugs oder um das Schienenfahrzeug selbst. Der Durchbruch befindet sich dann an einer Wand des Waggons oder des Schienenfahrzeugs. Mithilfe zweier erfindungsgemäßer Durchführungsgehäuse können dementsprechend zwei Waggons strom- und datentechnisch miteinander verbunden werden.

Die Ebene, in der der sich die Durchbruchsöffnung befindet und die Ebene, in der sich die Austrittsöffnung befindet, sind im Wesentlichen senkrecht zueinander ausgerichtet. Diese Anordnung erlaubt eine besonders platzsparende Leitungs- bzw. Kabelführung innerhalb des Durchführungsgehäuses.

Vorzugsweise weist der Gehäusekörper genau eine Durchbruchsöffnung und genau zwei Austrittsöffnungen auf. Die durch die Durchbruchsöffnung in das Durchführungsgehäuse einlaufenden Kabel bzw. Leitungen können innerhalb des Durchführungsgehäuse auf die beiden Austrittsöffnungen aufgeteilt werden. In diesem Fall fungiert das Durchführungsgehäuse als so genannter Y-Verteiler. Die in das Durchführungsgehäuse einlaufenden Leiter und/oder Kabel sind etwa senkrecht zu den an das Durchführungsgehäuse (über Steckverbinder) angeschlossenen Leitungen und/oder Kabeln angeordnet.

Vorzugsweise sind die Ebenen der Austrittsöffnungen parallel zueinander ausgerichtet und vertikal voneinander beabstandet. Ist das Durchführungsgehäuse an einer Wand befestigt kann man davon sprechen, dass die Austrittsöffnungen seitlich voneinander versetzt, das heißt unterschiedlich weit von der Wand entfernt, sind. Die von der Wand entferntere Austrittsöffnung ist über der näher an der Wand angeordneten Austrittsöffnung angeordnet. Vorzugsweise sind dabei die Ebenen der Austrittsöffnungen jeweils im Wesentlichen senkrecht zur Durchbruchsöffnung ausgerichtet. Diese Anordnung hat sich als besonders kompakt und platzsparend erwiesen.

Gemäß der Erfindung weist der Gehäusekörper an seiner Außenseite entlang der Durchbruchsöffnung eine umlaufende Nut auf. Die Nut ist dafür vorgesehen eine Dichtung aufzunehmen und das Durchführungsgehäuse wandseitig mediendicht abzudichten.

Bevorzugterweise weist das Durchführungsgehäuse Öffnungen zur Befestigung an einer Wand auf. Über die Öffnungen kann das Durchführungsgehäuse beispielsweise an einer Wand angeschraubt werden. Vorzugsweise sind diese Öffnungen sowohl am Gehäusekörper als auch am Gehäusedeckel vorgesehen. Um den Gehäusedeckel zu entfernen, müssen dann zunächst die Schrauben am Gehäusedeckel entfernt werden. Die Öffnungen des Gehäusedeckels übernehmen dann zusätzlich eine Verriegelungsfunktion zwischen dem Gehäusekörper und dem Gehäusedeckel.

Erfindungsgemäß besteht das Durchführungsgehäuse aus Metall. Dadurch werden die Schirmeigenschaften des Durchführungsgehäuses, insbesondere für elektromagnetische Felder, erhöht. Das Durchführungsgehäuse ist zumindest bereichsweise mit einer Lackierung versehen. Die Lackierung dient insbesondere dem Korrosionsschutz, unterstützt aber gleichzeitig dessen modernes und schlankes Design.

Gemäß der Erfindung ist der Gehäusekörper des Durchführungsgehäuses, zwischen der umlaufenden Nut und der Durchbruchsöffnung, lackierungsfrei. In diesem Fall ist das Durchführungsgehäuse nur bereichsweise, also eben nicht vollständig, lackiert. Der Bereich zwischen der umlaufenden Nut und der Durchbruchsöffnung steht im angeschraubten Zustand im direkten Berührkontakt mit der Wand. Bei einer metallischen Wand kann dadurch eine leitende Verbindung zwischen dem Durchführungsgehäuse und der Wand hergestellt werden, was erdungstechnische Vorteile mit sich bringt. Besonders vorteilhaft ist es, wenn das Durchführungsgehäuse Befestigungsmittel zur Befestigung eines Halterahmens eines modularen Steckverbindersystems und/oder eines Steckverbinders aufweist. Halterahmen sind beispielsweise aus der EP 0 860 906 B1 bekannt.

Üblicherweise werden die Halterahmen mit gleichartigen und/oder unterschiedlichen Steckverbindermodulen bestückt. Die Halterahmen dienen somit dazu, mehrere zueinander gleichartige und/oder auch unterschiedliche Steckverbindermodule aufzunehmen und diese sicher im Durchführungsgehäuse zu befestigen.

Zur Befestigung der Halterahmen weist das Durchführungsgehäuse im Bereich der Austrittsöffnungen Gewindeöffnungen auf, mithilfe deren der Halterahmen innerhalb der Austrittsöffnung fixiert werden kann. Die Austrittsöffnung stellt mit dem mit Steckverbindermodulen bestückten Halterahmen eine Anschlussbuchse für einen Steckverbinder dar.

Die Steckverbindermodule besitzen in der Regel jeweils einen im Wesentlichen quaderförmigen Isolierkörper bzw. ein quaderförmiges Gehäuse. Diese Isolierköper bzw. Gehäuse können beispielsweise als Kontaktträger dienen und Kontakte verschiedenster Art aufnehmen und fixieren. Die Funktion eines dadurch gebildeten Steckverbinders ist also sehr flexibel. Es können z.B. pneumatische Module, optische Module, Module zur Übertragung elektrischer Energie und/oder elektrischer analoger und/oder digitaler Signale im jeweiligen Isolierkörper bzw. Gehäuse aufgenommen sein und so im Steckverbindermodularsystem Verwendung finden. Zunehmend übernehmen Steckverbindermodule auch mess- und datentechnische Aufgaben.

Es ist aber auch möglich im Durchführungsgehäuse komplette Steckverbinder, insbesondere Steckverbinder zur Übertragung hoher Ströme, zu fixieren. Auch die Steckverbinder werden im Bereich der Austrittsöffnung fixiert und bilden hier einen Anschlusspunkt für einen Gegensteckverbinder. Ein solcher Steckverbinder ist beispielsweise in der DE 10 2011 001 064 B3 dargestellt.

### Ausführungsbeispiel

Ein Ausführungsbeispiel der Erfindung ist in den Zeichnungen dargestellt und wird im Folgenden näher erläutert. Es zeigen:
- Fig. 1: eine perspektivische Darstellung eines erfindungsgemäßen Durchführungsgehäuses,
- Fig. 2: eine Draufsicht auf die Rückseite des erfindungsgemäßen Durchführungsgehäuses,
- Fig. 3: eine Draufsicht auf die Frontseite des erfindungsgemäßen Durchführungsgehäuses,
- Fig. 4: eine perspektivische Darstellung eines Gehäusekörpers des erfindungsgemäßen Durchführungsgehäuses,
- Fig. 5: eine weitere perspektivische Darstellung des Gehäusekörpers des erfindungsgemäßen Durchführungsgehäuses,
- Fig. 6: eine perspektivische Darstellung eines Gehäusedeckels des erfindungsgemäßen Durchführungsgehäuses,
- Fig. 7: eine weitere perspektivische Darstellung des Gehäusedeckels des erfindungsgemäßen Durchführungsgehäuses,
- Fig. 8: eine perspektivische Darstellung des erfindungsgemäßen Durchführungsgehäuses, in welches zwei Steckverbinder eingesteckt sind und
- Fig. 9: eine weitere perspektivische Darstellung des erfindungsgemäßen Durchführungsgehäuses, in welches zwei Steckverbinder eingesteckt sind.

Die Figuren enthalten teilweise vereinfachte, schematische Darstellungen.

Zum Teil werden für gleiche, aber gegebenenfalls nicht identische Elemente identische Bezugszeichen verwendet. Verschiedene Ansichten gleicher Elemente könnten unterschiedlich skaliert sein.

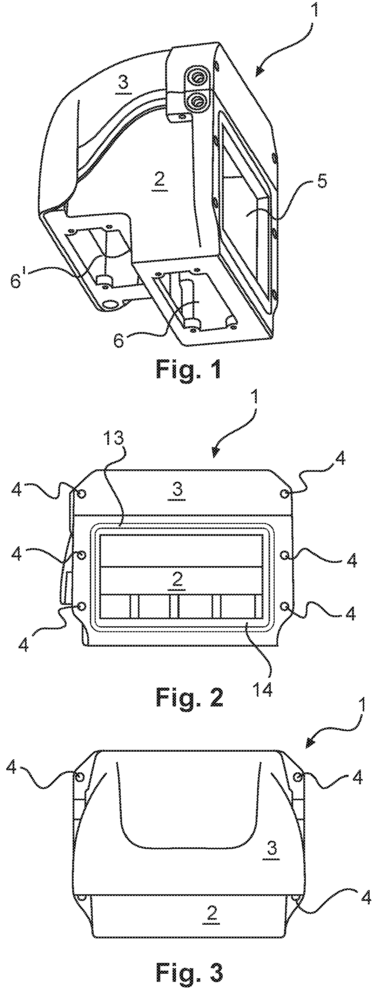

Die Figuren 1 bis 3 zeigen jeweils ein erfindungsgemäßes Durchführungsgehäuse 1. Das Durchführungsgehäuse 1 wird in der Regel im Bahnbereich eingesetzt und dient dazu zwei Bereiche, in der Regel sind dies zwei Wagons, strom- und signaltechnisch miteinander zu verbinden. Das Durchführungsgehäuse 1 ist zweiteilig ausgestaltet und weist einen Gehäusekörper 2 und einen dazu passenden, gewölbten Gehäusedeckel 3 auf. Das Durchführungsgehäuse 1 weist Öffnungen 4 zur Befestigung des Durchführungsgehäuses 1 an eine Wand eines Waggons (aus darstellerischen Gründen nicht gezeigt) auf.

Das Durchführungsgehäuse 1 weist eine im Wesentlichen rechteckige Durchbruchsöffnung 5 auf. Die Durchbruchsöffnung 5 ist in Figur 2 in einer Draufsicht zu erkennen. Das Durchführungsgehäuse 1 ist mit der Durchbruchsöffnung 5 zur oben erwähnten Wand gerichtet und korreliert dort mit einer in der Wand befindlichen Durchbruchsöffnung. Das Durchführungsgehäuse 1 weist zwei im Wesentlichen rechteckige Austrittsöffnungen 6 auf. Die Ebene, in welcher sich die Durchbruchsöffnung 5 befindet und die Ebenen, in welcher sich jeweils die Austrittsöffnungen 6, 6' befinden, stehen senkrecht zueinander.

Die sich in einem Bereich befindlichen Leitungen und/oder Kabel werden in Eintrittsrichtung E in die Durchbruchsöffnung 5 eingeführt. Dort werden die Leitungen und/oder Kabel an Steckverbindermodulen (nicht gezeigt) und/oder Steckverbindern (nicht gezeigt) angeschlossen, die im Bereich der Austrittsöffnungen 6 innerhalb des Gehäusekörpers 2 angeordnet sind. Hier bilden sie eine Anschlussmöglichkeit für Steckverbinder 7, die an das Durchführungsgehäuse 1 gesteckt werden, so dass die Ströme und/oder Signale der Leitungen und/oder der Kabel das Durchführungsgehäuse 1 in Austrittsrichtung A verlassen. Die Steckverbinder 7 werden mithilfe eines Verriegelungsbügels 8 am Durchführungsgehäuse 1 reversibel befestigt. Die Eintrittsrichtung E und die Austrittsrichtung A stehen, genau wie die oben erwähnten Ebenen von Durchbruchsöffnung 5 und Austrittsöffnungen 6, 6', senkrecht zueinander.

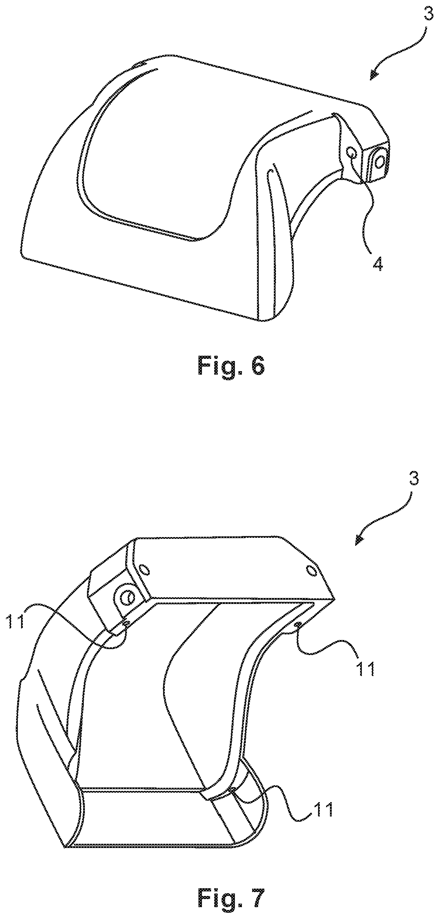

In den Figuren 6 und 7 ist der Gehäusedeckel 3 des Durchführungsgehäuses jeweils perspektivisch dargestellt. Die besondere Haubenform des Gehäusedeckels 3 ermöglicht die Gestaltung einer großzügigen Zugriffsöffnung 12, die viel Raum bei der Installation bzw. Verkabelung bietet.

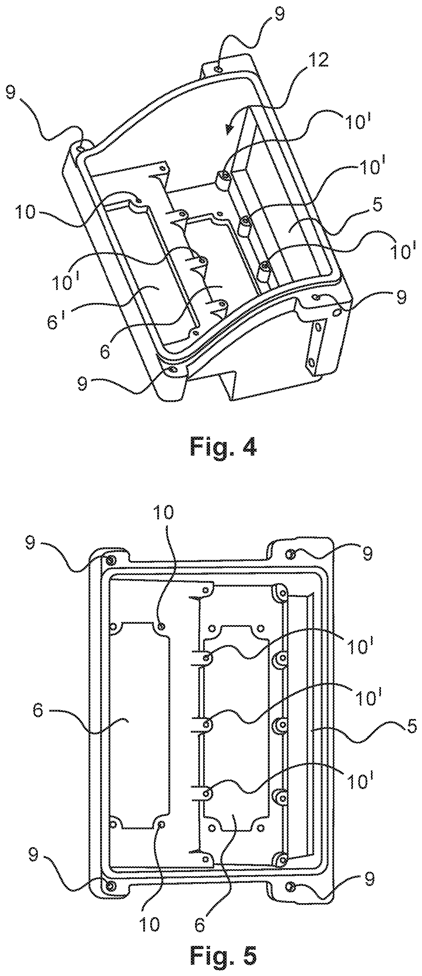

In den Figuren 4 und 5 ist der Gehäusekörper 2 des Durchführungsgehäuses 1 ohne Gehäusedeckel 3 perspektivisch dargestellt. Ist der Gehäusedeckel 3 vom Durchführungsgehäuse 1 entfernt, kann ein Installateur einfach auf die Durchbruchsöffnung und die dadurch hindurchgeführten Kabel und/oder Leitungen zugreifen. Er kann die Leitungen und/oder Kabel entsprechend an Steckverbindermodule und/oder Steckverbinder anschließen und diese im Bereich der Austrittsöffnungen 6, 6' befestigen. Dazu sind im Bereich der Austrittsöffnungen 6, 6' Gewindeöffnungen 10, 10' vorgesehen. Im Gehäusekörper 2 sind entlang der Zugriffsöffnung 12 Öffnungen 9 vorgesehen, die mit Gewindeöffnungen 11 des Gehäusedeckels 3 korrelieren. Dadurch kann der Gehäusedeckel 3 verliersicher und reversibel am Gehäusekörper 2 befestigt werden.

Die Austrittsöffnungen 6, 6' sind vertikal voneinander beabstandet. Die untere Austrittsöffnung 6 ist näher an der Wand positioniert. Die obere Austrittsöffnung 6' ist weiter von der Wand entfernt. Diese Anordnung erhöht weiterhin den Installationskomfort des Durchführungsgehäuses 1. Beide Austrittsöffnungen 6, 6' sind für die anzuschließenden Leiter und/oder Kabel einfach zu erreichen.

Um die Durchbruchsöffnung 5 herum weist der Gehäusekörper 2 eine umlaufende Nut 13 auf. In die Nut 13 wird eine Dichtung eingelegt, um die korrespondierenden Durchbrüche bzw. Öffnungen von Wand und Durchführungsgehäuse 1 gegen das Eindringen von Medien abzudichten.

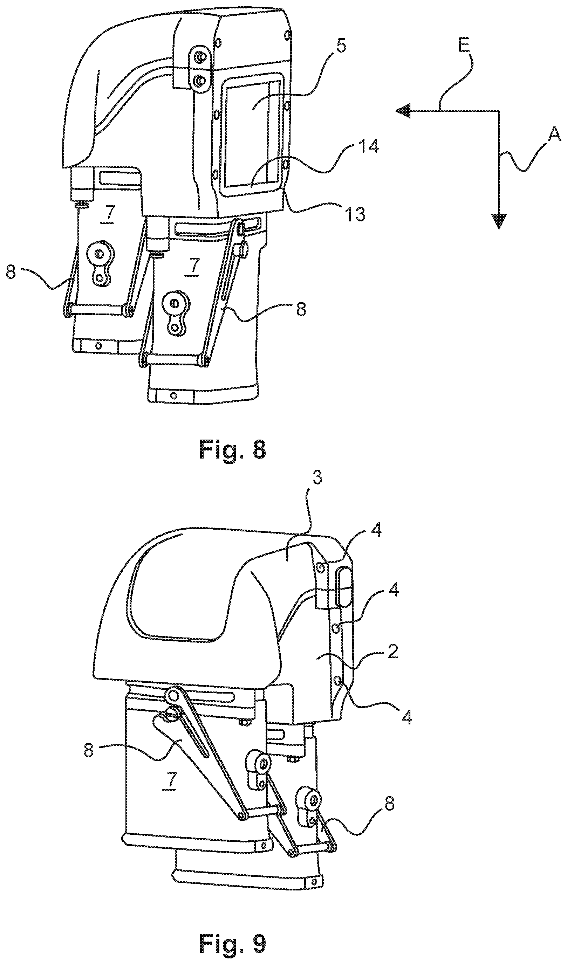

Das Durchführungsgehäuse 1 ist nahezu vollständig mit einer Lackierung versehen. Lediglich der Gehäusekörper 2 weist einen lackierungsfreien Bereich 14 auf. Der lackierungsfreie Bereich 14 ist zwischen der umlaufenden Nut 13 und der Durchbruchsöffnung 5 angeordnet ist, wie in den Figuren 2 und 8 zu erkennen ist.

Auch wenn in den Figuren verschiedene Aspekte oder Merkmale der Erfindung jeweils in Kombination gezeigt sind, ist für den Fachmann - soweit nicht anders angegeben - ersichtlich, dass die dargestellten und diskutierten Kombinationen nicht die einzig möglichen sind. Insbesondere können einander entsprechende Einheiten oder Merkmalskomplexe aus unterschiedlichen Ausführungsbeispielen miteinander ausgetauscht werden.

### Bezugszeichenliste

- 1: Durchführungsgehäuse
- 2: Gehäusekörper
- 3: Gehäusedeckel
- 4: Öffnung
- 5: Durchbruchsöffnung
- 6: Austrittsöffnung
- 7: Steckverbinder
- 8: Verriegelungsbügel
- 9: Öffnung
- 10: Gewindeöffnung
- 11: Gewindeöffnung
- 12: Zugriffsöffnung

- E:: Eintrittsrichtung
- A:: Austrittsrichtung

## Patentansprüche

1. Durchführungsgehäuse (1) zur Durchführung einer oder mehrerer Leitungen und/oder Kabel aus oder in einen geschlossenen Bereich, wobei der geschlossene Bereich ein Waggon eines Schienenfahrzeugs oder das Schienenfahrzeug selbst ist, und zum Anbau an eine Wand des geschlossenen Bereichs, bestehend aus einem Gehäusekörper (2) und einem dazu passenden, abnehmbaren Gehäusedeckel (3), wobei das Durchführungsgehäuse (1) aus Metall besteht und zumindest bereichsweise mit einer Lackierung versehen ist,
wobei der Gehäusekörper (2) eine Durchbruchsöffnung (5) und zwei Austrittsöffnungen (6, 6') aufweist,
wobei die in dem Bereich befindlichen Leitungen und/oder Kabel in Eintrittsrichtung (E) in die Durchbruchsöffnung (5) einführbar sind,
wobei die Ströme und/oder Signale der Leitungen und/oder der Kabel das Durchführungsgehäuse (1) durch die Austrittsöffnungen (6, 6') jeweils in Austrittsrichtung (A) verlassen,
wobei die Eintrittsrichtung (E) und die Austrittsrichtungen (A) senkrecht zueinander stehen,
wobei die Ebenen der Austrittsöffnungen (6, 6') parallel zueinander ausgerichtet und voneinander beabstandet sind,
und wobei die jeweilige Austrittrichtung (A) der Austrittsöffnungen (6, 6') voneinander beabstandet sind, so dass die Austrittsöffnungen (6, 6') voneinander versetzt ausgerichtet sind und dass die jeweiligen Austrittrichtungen (A) unterschiedlich weit von der Wand des geschlossenen Bereichs beabstandet sind,
und wobei der Gehäusekörper (2) entlang der Durchbruchsöffnung (5) eine umlaufende Nut (13) aufweist, in welche eine Dichtung einlegbar ist, und
wobei der Gehäusekörper (2) einen lackierungsfreien Bereich (14) aufweist, der zwischen der umlaufenden Nut (13) und der Durchbruchsöffnung (5) angeordnet ist, zur Herstellung einer leitenden Verbindung mit einer metallischen Wand.

2. Durchführungsgehäuse nach vorstehendem Anspruch
**wobei** der Gehäusekörper (2) eine Zugriffsöffnung (12) aufweist, die einen Zugriff auf die Durchbruchsöffnung (5) und die zwei Austrittsöffnungen (6, 6') erlaubt.

3. Durchführungsgehäuse nach einem der beiden vorstehenden Ansprüche
**wobei** die Ebenen der Austrittsöffnungen (6, 6') jeweils im Wesentlichen senkrecht zur Durchbruchsöffnung (5) ausgerichtet sind.

4. Durchführungsgehäuse nach einem der vorstehenden Ansprüche
**wobei** das Durchführungsgehäuse (1) Öffnungen (4) zur Befestigung des Durchführungsgehäuses (1) an eine Wand aufweist.

5. Durchführungsgehäuse nach vorstehendem Anspruch
**wobei** sowohl der Gehäusekörper (2) als auch der Gehäusedeckel (3) Öffnungen (4) zur Befestigung des Durchführungsgehäuses (1) an eine Wand aufweisen.

## Claims

1. Feedthrough housing (1) for feeding one or more lines and/or cables out of or into an enclosed area, wherein the enclosed area is a carriage of a rail vehicle or the rail vehicle itself, and for mounting on a wall of the enclosed area,
consisting of a housing body (2) and a matching, removable housing cover (3), wherein the feedthrough housing (1) is made of metal and is provided with a coating at least in some areas,
wherein the housing body (2) has a breakthrough opening (5) and two exit openings (6, 6'),
wherein the lines and/or cables located in the area can be inserted in an entry direction (E) into the breakthrough opening (5),
wherein the currents and/or signals of the lines and/or cables leave the feedthrough housing (1) through the exit openings (6, 6') respectively in an exit direction (A),
wherein the entry direction (E) and the exit directions (A) are perpendicular to each other,
wherein the planes of the exit openings (6, 6') are aligned parallel to each other and spaced apart from each other,
and wherein the respective exit directions (A) of the exit openings (6, 6') are spaced apart from each other, so that the exit openings (6, 6') are aligned offset from each other
and that the respective exit directions (A) are spaced at different distances from the wall of the enclosed area, and wherein
the housing body (2) has a circumferential groove (13) along the breakthrough opening (5), into which a seal can be inserted, and wherein
the housing body (2) has a coating-free area (14) which is arranged between the circumferential groove (13) and the breakthrough opening (5), for establishing a conductive connection with a metallic wall.

2. Feedthrough housing according to the preceding claim, wherein the housing body (2) has an access opening (12) which allows access to the breakthrough opening (5) and the two exit openings (6, 6').

3. Feedthrough housing according to one of the two preceding claims, wherein the planes of the exit openings (6, 6') are each aligned substantially perpendicular to the breakthrough opening (5).

4. Feedthrough housing according to one of the preceding claims,
wherein the feedthrough housing (1) has openings (4) for fastening the feedthrough housing (1) to a wall.

5. Feedthrough housing according to the preceding claim, wherein both the housing body (2) and the housing cover (3) have openings (4) for fastening the feedthrough housing (1) to a wall.

## Revendications

1. Boîtier de traversée (1) pour le passage d'une ou plusieurs lignes et/ou câbles hors d'une zone fermée ou dans une zone fermée, la zone fermée étant un wagon d'un véhicule ferroviaire ou le véhicule ferroviaire lui-même, et pour le montage sur une paroi de la zone fermée,
constitué d'un corps de boîtier (2) et d'un couvercle de boîtier (3) correspondant et amovible, le boîtier de traversée (1) étant en métal et étant pourvu d'un revêtement au moins dans certaines zones, le corps de boîtier (2) présentant une ouverture de passage (5) et deux ouvertures de sortie (6, 6'),
les lignes et/ou câbles situés dans la zone pouvant être introduits dans une direction d'entrée (E) dans l'ouverture de passage (5), les courants et/ou signaux des lignes et/ou des câbles quittant le boîtier de traversée (1) par les ouvertures de sortie (6, 6') respectivement dans une direction de sortie (A),
la direction d'entrée (E) et les directions de sortie (A) étant perpendiculaires l'une à l'autre,
les plans des ouvertures de sortie (6, 6') étant alignés parallèlement l'un à l'autre et espacés l'un de l'autre,
et les directions de sortie (A) respectives des ouvertures de sortie (6, 6') étant espacées l'une de l'autre, de sorte que les ouvertures de sortie (6, 6') sont alignées de manière décalée l'une par rapport à l'autre
et que les directions de sortie (A) respectives sont espacées à des distances différentes de la paroi de la zone fermée, et
le corps de boîtier (2) présentant une rainure périphérique (13) le long de l'ouverture de passage (5), dans laquelle un joint peut être inséré, et
le corps de boîtier (2) présentant une zone sans revêtement (14) qui est disposée entre la rainure périphérique (13) et l'ouverture de passage (5), pour établir une connexion conductrice avec une paroi métallique.

2. Boîtier de traversée selon la revendication précédente, le corps de boîtier (2) présentant une ouverture d'accès (12) qui permet l'accès à l'ouverture de passage (5) et aux deux ouvertures de sortie (6, 6').

3. Boîtier de traversée selon l'une des deux revendications précédentes, les plans des ouvertures de sortie (6, 6') étant chacun alignés essentiellement perpendiculairement à l'ouverture de passage (5).

4. Boîtier de traversée selon l'une des revendications précédentes, le boîtier de traversée (1) présentant des ouvertures (4) pour la fixation du boîtier de traversée (1) à une paroi.

5. Boîtier de traversée selon la revendication précédente, le corps de boîtier (2) ainsi que le couvercle de boîtier (3) présentant tous deux des ouvertures (4) pour la fixation du boîtier de traversée (1) à une paroi.
